# EUROPEAN PATENT APPLICATION

(11) **EP 4 472 339 A1**
(43) Date of publication of application: **04.12.2024**
(21) Application number: 22937709.8
(22) Date of filing: 18.04.2022
(51) Int. Cl.: H04W 88/04

(54) **COMMUNICATION METHODS AND DEVICES, STORAGE MEDIUM AND COMPUTER PROGRAM PRODUCT**

(71) Applicant: Huawei Technologies Co., Ltd., Shenzhen, Guangdong 518129 (CN)
(72) Inventor: CAO, Cong, Shenzhen, Guangdong 518129 (CN); YAN, Lingfeng, Shenzhen, Guangdong 518129 (CN); MA, Zhepeng, Shenzhen, Guangdong 518129 (CN)
(74) Representative: Goddar, Heinz J.
(86) International application number: PCT/CN2022/087415
(87) International publication number: WO 2023/201469

(57) **Abstract**

Embodiments of this disclosure relate to a short-distance wireless communication method, a device, a storage medium, and a computer program product. The method provided herein includes: A sending device sends first clock information to a relay device, where the first clock information indicates a local clock of the sending device, and communication between the sending device and a receiving device is performed based on at least the first clock information. The sending device sends first service data to the receiving device via the relay device. In this manner, the relay device can relay and amplify Bluetooth information to increase a transmission distance, and ensure that a frequency hopping sequence, physical layer modulation and bandwidth, and an encryption mode remain unchanged before and after a host is transferred, to ensure a service to be continuously performed and avoid freezing.

## Description

### TECHNICAL FIELD

Embodiments of this disclosure generally relate to the field of communication technologies, and more specifically, to a short-distance wireless communication method, a device, a storage medium, and a computer program product.

### BACKGROUND

A short-distance wireless communication technology is a technology for wireless transmission of data in a small area. The short-distance wireless communication technology usually covers an area from several meters to hundreds of meters. A Bluetooth (Bluetooth, BT) technology is a common short-distance wireless communication technology. In a typical Bluetooth device, a standard transmission distance is merely 10 meters. A case in which an output power is increased to 20 dBm and the transmission distance can reach 100 meters is also extremely limited for a current expected implementation scenario. In addition, the transmission distance decreases sharply when there is a shelter.

### SUMMARY

Generally, example embodiments of this disclosure provide a short-distance wireless communication method, a device, a computer-readable storage medium, and a computer program product.

According to a first aspect of this disclosure, a short-distance wireless communication method is provided. In the method, a sending device sends first clock information to a relay device, where the first clock information indicates a local clock of the sending device, and communication between the sending device and a receiving device is performed based on at least the first clock information. The sending device sends first service data to the receiving device via the relay device.

In a first implementation of the first aspect, the sending device sends, to the relay device, configuration information associated with the communication, where the configuration information includes at least one of encryption information for the communication, address information of the receiving device, modulation information for the communication, a configuration parameter of a control layer, and a configuration parameter of an application layer.

In a second implementation of the first aspect, the sending device may send the first clock information to the relay device via another relay device.

In a third implementation of the first aspect, the sending device may send the first service data to the relay device via another relay device.

In a fourth implementation of the first aspect, the sending device may receive second service data of the receiving device via the relay device.

In a fifth implementation of the first aspect, short-distance wireless communication may include one of the following: Bluetooth communication, Greentooth communication, mobile hotspot (Wi-Fi) communication, Zigbee (Zigbee) communication, or SparkLink communication.

According to the method provided in the first aspect of this disclosure, when the sending device determines that the receiving device is to move away from a coverage area of the sending device and move to a coverage area of the relay device, the sending device may send, to the relay device, clock information of the sending device and the configuration information associated with the communication between the sending device and the receiving device, so that the relay device may forward, to the receiving device, a data service from the sending device after the sending device sends, to the relay device, the service data to be sent to the receiving device, without perceiving by the receiving device that a direct link between the sending device and the receiving device is disconnected, and based on the clock information of the sending device and the configuration information associated with the communication. This can minimize a limitation on a transmission distance in a short-distance wireless communication technology, and can enable the receiving device to still receive the service data based on a clock offset and configuration information that match a sending device in previous communication in a moving process.

According to a second aspect of this disclosure, a short-distance wireless communication method is provided. In the method, a relay device receives first clock information from a sending device, where the first clock information indicates a local clock of the sending device, and communication between the sending device and a receiving device is performed based on at least the first clock information. The relay device updates second clock information based on at least the first clock information, where the second clock information indicates a local clock of the relay device. The relay device sends, to the receiving device, first service data from the sending device based on at least updated second clock information.

In a first implementation of the second aspect, the relay device may determine a second clock offset between the sending device and the relay device based on the first clock information and the second clock information, and update the second clock information based on the second clock offset and the first clock information.

In a second implementation of the second aspect, the relay device may receive, from the receiving device, configuration information associated with the communication, where the configuration information includes at least one of encryption information for the communication, address information of the receiving device, modulation information for the communication, a configuration parameter of a control layer, and a configuration parameter of an application layer.

In a third implementation of the second aspect, the relay device may receive, via another relay device, the first clock information associated with the sending device.

In a fourth implementation of the second aspect, the relay device may receive, via another relay device, the first service data to be sent to the receiving device.

In a fifth implementation of the second aspect, the relay device may receive second service data of the receiving device from the receiving device, and forward the second service data to the sending device based on configuration information.

In a sixth implementation of the second aspect, short-distance wireless communication may include one of the following: Bluetooth communication, Greentooth communication, mobile hotspot (Wi-Fi) communication, Zigbee (Zigbee) communication, or SparkLink communication.

According to a third aspect of this disclosure, a short-distance wireless communication method is provided. In the method, a receiving device receives first service data from the receiving device via a relay device based on a first clock offset between the receiving device and a sending device and configuration information associated with communication between the sending device and the receiving device.

In a first implementation of the second aspect, the configuration information includes at least one of encryption information for the communication, address information of the receiving device, modulation information for the communication, a configuration parameter of a control layer, and a configuration parameter of an application layer.

In a second implementation of the second aspect, the receiving device may send second service data of the receiving device based on the configuration information.

In a third implementation of the second aspect, short-distance wireless communication may include one of the following: Bluetooth communication, Greentooth communication, mobile hotspot (Wi-Fi) communication, Zigbee (Zigbee) communication, or SparkLink communication.

According to a fourth aspect of this disclosure, a sending device is provided. The sending device includes at least one processor and at least one memory including computer program code. The at least one memory and the computer program code may work with the at least one processor to enable the at least one processor to perform the method according to the first aspect of this disclosure.

According to a fifth aspect of this disclosure, a relay device is provided. The relay device includes at least one processor and at least one memory including computer program code. The at least one memory and the computer program code may work with the at least one processor to enable the at least one processor to perform the method according to the second aspect of this disclosure.

According to a sixth aspect of this disclosure, a receiving device is provided. The receiving device includes at least one processor and at least one memory including computer program code. The at least one memory and the computer program code may work with the at least one processor to enable the at least one processor to perform the method according to the third aspect of this disclosure.

According to a seventh aspect of this disclosure, a computer-readable storage medium is provided. The computer-readable storage medium stores computer-executable instructions, and when the computer-executable instructions are executed by a processor, the processor is enabled to perform the method according to the first aspect, the second aspect, or the third aspect of this disclosure.

According to an eighth aspect of this disclosure, a computer program product is provided. The computer program product includes computer-executable instructions, and when the computer-executable instructions are executed by a processor, the processor is enabled to perform the method according to the first aspect, the second aspect, or the third aspect of this disclosure.

According to a ninth aspect of this disclosure, a communication apparatus is provided. The communication apparatus includes a transceiver unit and a processing unit. The transceiver unit is configured to: send first clock information to a relay device, where the first clock information indicates a local clock of a sending device, and communication between the sending device and a receiving device is performed based on at least the first clock information; and send first service data to the receiving device via the relay device.

In a first implementation of the ninth aspect, the transceiver unit is further configured to send the first clock information to the relay device via another relay device.

In a second implementation of the ninth aspect, the transceiver unit is further configured to send the first service data to the relay device via another relay device.

In a third implementation of the ninth aspect, the transceiver unit is further configured to receive second service data of the receiving device via the relay device.

In a fourth implementation of the ninth aspect, the transceiver unit is further configured to send, to the relay device, configuration information associated with the communication, where the configuration information includes at least one of encryption information for the communication, address information of the receiving device, modulation information for the communication, a configuration parameter of a control layer, and a configuration parameter of an application layer.

In a fifth implementation of the ninth aspect, short-distance wireless communication may include one of the following: Bluetooth communication, Greentooth communication, mobile hotspot (Wi-Fi) communication, Zigbee (Zigbee) communication, or SparkLink communication.

According to a tenth aspect of this disclosure, a communication apparatus is provided. The communication apparatus includes a transceiver unit and a processing unit. The transceiver unit is configured to: receive first clock information from a sending device, where the first clock information indicates a local clock of the sending device, and communication between the sending device and a receiving device is performed based on at least the first clock information; and send, to the receiving device, first service data from the sending device based on at least updated second clock information. The processing unit is used by a relay device to update second clock information based on at least the first clock information, where the second clock information indicates a local clock of the relay device.

In a first implementation of the tenth aspect, the processing unit is further configured to: determine a second clock offset between the sending device and the relay device based on the first clock information and the second clock information; and update the second clock information based on the second clock offset and the first clock information.

In a second implementation of the tenth aspect, the transceiver unit is further configured to receive, via another relay device, the first clock information associated with the sending device.

In a third implementation of the tenth aspect, the transceiver unit is further configured to receive, via another relay device, the first service data to be sent to the receiving device.

In a fourth implementation of the tenth aspect, the transceiver unit is further configured to: receive second service data of the receiving device from the receiving device; and forward the second service data to the sending device based on configuration information.

In a fifth implementation of the tenth aspect, the transceiver unit is further configured to receive, from the receiving device, configuration information associated with the communication, where the configuration information includes at least one of encryption information for the communication, address information of the receiving device, modulation information for the communication, a configuration parameter of a control layer, and a configuration parameter of an application layer.

In a sixth implementation of the tenth aspect, short-distance wireless communication may include one of the following: Bluetooth communication, Greentooth communication, mobile hotspot (Wi-Fi) communication, Zigbee (Zigbee) communication, or SparkLink communication.

According to an eleventh aspect of this disclosure, a communication apparatus is provided. The communication apparatus includes a transceiver unit and a processing unit. The transceiver unit receives first service data from a receiving device via a relay device based on a first clock offset between the receiving device and a sending device and configuration information associated with communication between the sending device and the receiving device.

In a first implementation of the eleventh aspect, the transceiver unit is further configured to send second service data of the receiving device based on the configuration information.

In a second implementation of the eleventh aspect, the configuration information includes at least one of encryption information for the communication, address information of the receiving device, modulation information for the communication, a configuration parameter of a control layer, and a configuration parameter of an application layer.

In a third implementation of the eleventh aspect, short-distance wireless communication may include one of the following: Bluetooth communication, Greentooth communication, mobile hotspot (Wi-Fi) communication, Zigbee (Zigbee) communication, or SparkLink communication.

According to a twelfth aspect of this disclosure, a communication apparatus is provided, including at least one processor. The at least one processor is configured to execute a computer program or instructions in a memory, to enable the communication apparatus to perform the method according to embodiments of the first aspect, the second aspect, or the third aspect.

According to a thirteenth aspect of this disclosure, a communication apparatus is provided, including a processor, a transceiver, and a memory. The processor is configured to execute a computer program or instructions in the memory, to enable the communication apparatus to perform the method according to embodiments of the first aspect, the second aspect, or the third aspect.

According to a fourteenth aspect of this disclosure, a communication apparatus is provided, including a processor and a memory. The processor is configured to execute a computer program or instructions in the memory, to enable the communication apparatus to perform the method according to embodiments of the first aspect, the second aspect, or the third aspect.

According to a fifteenth aspect of this disclosure, another communication apparatus is provided, including an interface circuit and a logic circuit. The interface circuit may be understood as an input/output interface, and the logic circuit may be used to run code instructions to perform the method according to embodiments of the first aspect, the second aspect, or the third aspect.

### BRIEF DESCRIPTION OF DRAWINGS

The foregoing and other features, advantages, and aspects of embodiments of this disclosure become clearer with reference to the accompanying drawings and the following detailed descriptions. In the accompanying drawings, the same or similar reference numerals indicate the same or similar elements.
FIG. 1 shows a schematic diagram of an example network environment in which an example embodiment of this disclosure may be implemented;
FIG. 2 shows a schematic diagram of an example process of short-distance wireless communication according to an example embodiment of this disclosure;
FIG. 3 shows a schematic diagram of an example process of short-distance wireless communication according to an example embodiment of this disclosure;
FIG. 4 shows a flowchart of a short-distance wireless communication method according to an example embodiment of this disclosure;
FIG. 5 shows a flowchart of a short-distance wireless communication method according to an example embodiment of this disclosure;
FIG. 6 shows a flowchart of a short-distance wireless communication method according to an example embodiment of this disclosure;
FIG. 7 shows a block diagram of a communication apparatus according to an example embodiment of this disclosure;
FIG. 8 shows a block diagram of a communication apparatus according to an example embodiment of this disclosure;
FIG. 9 shows a block diagram of a communication apparatus according to an example embodiment of this disclosure; and
FIG. 10 shows a block diagram of a communication apparatus according to an example embodiment of this disclosure.

### DESCRIPTION OF EMBODIMENTS

The following describes some example embodiments with reference to the accompanying drawings. Although example embodiments of this disclosure are shown in the accompanying drawings, it should be understood that this disclosure may be implemented in various forms, and should not be construed as being limited to embodiments described herein. On the contrary, these embodiments are provided for a more thorough and complete understanding of this disclosure. It should be understood that the accompanying drawings and embodiments of this disclosure are merely used as examples, but are not intended to limit the protection scope of this disclosure.

The terms "communication network" and "wireless network" used in this specification are networks that comply with any appropriate communication standard, such as long term evolution (LTE), LTE-advanced (LTE-A), wideband code division multiple access (WCDMA), and high speed packet access (HSPA). In addition, communication between a receiving device and a sending device in the communication network may be performed according to any appropriate generation communication protocol, including but not limited to first generation (1G), second generation (2G), 2.5G, 2.75G, third generation (3G), fourth generation (4G), 4.5G, and fifth generation (5G) communication protocols, and/or any other protocols currently known or to be developed in the future. Embodiments of this disclosure may be applied to various communication systems, including cellular and non-cellular communication systems. In view of rapid development of communication, certainly, there are also a communication technology and a system that are of a future type and that may embody this disclosure. Therefore, the scope of this disclosure should not be considered to be limited to the systems described above. For a purpose of illustration, embodiments of this disclosure are described with reference to a 5G communication system.

The terms "sending device", "relay device", and "receiving device" used in this specification are any terminal device that can perform wireless communication. As an illustrative and non-limiting example, the "sending device", "relay device", or "receiving device" may also be referred to as a communication device, a terminal device, user equipment (UE), a subscriber station (SS), a portable subscriber station, a mobile station (MS), or an access terminal (AT). The "sending device", "relay device", and "receiving device" may include but are not limited to a mobile phone, a cellular phone, a smartphone, a voice over IP (VoIP) phone, a wireless local loop phone, a tablet computer, a wearable terminal device, a personal digital assistant (PDA), a portable computer, a desktop computer, an image capture terminal device (for example, a digital camera), a game terminal device, a music storage and playback device, a vehicle-mounted wireless terminal device, a wireless endpoint, a mobile station, laptop embedded equipment (LEE), laptop mounted equipment (LME), a USB dongle, a smart device, wireless customer premises equipment (CPE), an internet of things (loT) device, a watch or another wearable device, a head-mounted display (HMD), a vehicle, a drone, a medical device and application (for example, remote surgery), an industrial device and application (for example, a robot and/or another wireless device running in an industrial and/or automatic processing chain environment), a consumer-type electronic device, a commercial operation device and/or an industrial wireless network.

The term "include" and variants thereof used in this specification indicate open inclusion, that is, "include but is not limited to". Unless otherwise stated, the term "or" means "and/or". The term "based on" means "at least partially based on". The terms "example embodiments" and "some embodiments" represent "at least one example embodiment". Another explicit and implicit definition may also be included below.

As mentioned above, a short-distance wireless communication technology is a technology for wireless transmission of data in a small area. The short-distance wireless communication technology usually covers an area from several meters to hundreds of meters. A Bluetooth (Bluetooth, BT) technology is a common short-distance wireless communication technology. In a typical Bluetooth device, a standard transmission distance is merely 10 meters. A case in which an output power is increased to 20 dBm and the transmission distance can reach 100 meters is also extremely limited for a current expected implementation scenario. In addition, the transmission distance decreases sharply when there is a shelter.

In an existing solution, if a transmission distance is too long, it is usually considered to increase a transmit power or increase a quantity of retransmission times.

When a high power is used to transmit, although the transmission distance may be increased, power consumption may be significantly increased. This is not appropriate for a low-power consuming Bluetooth solution. In addition, increasing a transmit power of a device causes interference to another surrounding device. As a result, the device and the another surrounding device further increase transmit power, and mutual interference is caused. Consequently, transmission quality of all devices in the environment deteriorates.

If the quantity of retransmission times is increased, more transmission opportunities are needed for sending a single packet. As a result, power consumption is increased, a transmission delay is increased, and interference immunity is clearly reduced.

If it is considered to relay and amplify a Bluetooth signal, the Bluetooth transmission distance can be significantly increased. However, a challenge brought by this is that Bluetooth is a system that performs frequency hopping and encryption along with a host clock. When a host (a transmit end) is transferred (where in other words, a function of a current transmit end is transferred to another relay device), a frequency hopping sequence, physical layer modulation and bandwidth configurations, and an encryption mode of a receive end also need to be changed. In this period of time, a service cannot be continuously performed, causing freezing and reducing user experience.

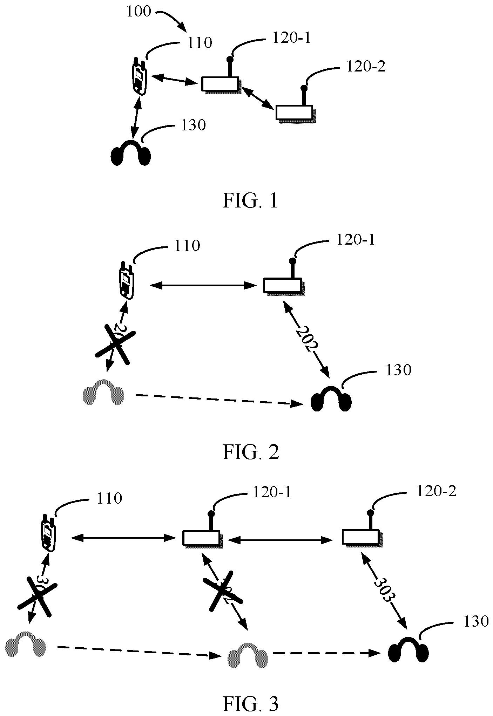

Example processes of short-distance wireless communication according to embodiments of this disclosure are described below with reference to FIG. 1 to FIG. 5.

FIG. 1 shows a schematic diagram of an example network environment 100 in which an example embodiment of this disclosure may be implemented. As shown in FIG. 1, the network environment 100 may include a device 110 that can implement short-distance wireless communication transmission. In some embodiments, the device 110 may be referred to as a sending device 110 in short-distance wireless communication. The network environment 100 may include devices 120-1 and 120-2 that can implement the short-distance wireless communication transmission. In some embodiments, the devices 120-1 and 120-2 may be referred to as relay devices 120-1 and 120-2 in the short-distance wireless communication. In some embodiments, the devices 120-1 and 120-2 may also be collectively referred to as a relay device 120. The network environment 100 may further include a device 130 that can implement the short-distance wireless communication transmission. In some embodiments, the device 130 may be referred to as a receiving device 130 in the short-distance wireless communication. In the network environment 100, the device 110, the device 120, and the device 130 may perform communication with each other, for example, the short-distance wireless communication.

In the network environment 100, the device 110, the device 120, and the device 130 may include but are not limited to a mobile phone, a cellular phone, a smartphone, a tablet computer, a tablet mobile phone, a computer, a portable computer, a desktop computer, a personal digital assistant (PDA), a monitor, a computer monitor, a television, a tuner, an entertainment unit, a navigation device, a communication device, a fixed location data unit, a mobile location data unit, a radio, a satellite radio, a music player, a digital music player, a portable music player, a digital video player, a video player, a digital video disc (DVD) player, a portable digital video player, or any other appropriate device that can support the short-distance wireless communication.

It should be understood that the network environment 100 is merely used for an example purpose, and does not imply any limitation on the scope of this disclosure. Embodiments of this disclosure may be further embodied in another network environment or architecture. In addition, it should be further understood that the network environment 100 may further include another element or entity configured to implement a purpose of a communication connection, data transmission, or the like. For ease of description, the element or entity is not shown in FIG. 1, but this does not mean that embodiments of this disclosure do not have them.

The network environment 100 according to embodiments of this disclosure may be a wireless network that complies with any protocol currently known or to be developed in the future, including but not limited to a narrowband internet of things (Narrowband Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution (Long Term Evolution, LTE) system, and three application scenarios eMBB, URLLC, and eMTC of a 5G mobile communication system.

In the network environment 100, the sending device 110 and the receiving device 130 may perform the short-distance wireless communication with each other, for example, Bluetooth communication. Specifically, in some embodiments, when the receiving device 130 is in a coverage area of the sending device 110, the sending device 110 may transmit service data to the receiving device 130.

As described above, due to a limitation on a transmission distance, if the receiving device 130 is in a moving state, the receiving device 130 may gradually move away from the coverage area of the sending device 110. This causes data transmission losses or interruption.

One or more relay devices, such as the relay devices 120-1 and/or 120-2 in the network environment 100, may be used to increase the transmission distance of short-distance wireless transmission in the network environment 100.

For example, when the receiving device 130 moves away from the coverage area of the sending device 110 and moves close to a coverage area of the relay device 120-1, the sending device 110 may send, to the relay device 120-1, the service data to be sent to the receiving device 130, and then the relay device 120-1 sends the service data to the receiving device 130. Similarly, other service data backhauled from the receiving device 130 may also be forwarded to the sending device 110 via the relay device 120-1.

For example, a short-distance wireless technology in the network environment 100 uses a Bluetooth technology. As mentioned above, Bluetooth is a system that performs frequency hopping and encryption along with a host clock. When a host (a transmit end) is transferred (where in other words, a function of a current transmit end is transferred to another relay device), a frequency hopping sequence, physical layer modulation and bandwidth configurations, and an encryption mode of a receive end also need to be changed. In this period of time, a service cannot be continuously performed, causing freezing. Therefore, it is expected that when the relay device relays and amplifies Bluetooth information to increase the transmission distance, it can be ensured that the frequency hopping sequence, the physical layer modulation and bandwidth configurations, and the encryption mode remain unchanged before and after the host is transferred, to ensure the service to be continuously performed and avoid the freezing.

Therefore, embodiments of this disclosure provide a short-distance wireless communication method. In the method, in response to detecting that the receiving device that is communicating with the sending device is to move to the coverage area of the relay device, the sending device sends, to the relay device, first clock information associated with the sending device and configuration information associated with communication between the sending device and the receiving device. The sending device sends first service data to the receiving device via the relay device. In this manner, the transmission distance can be significantly increased, and service freezing and interruption in a signal relay process is avoided.

Now refer to FIG. 2. FIG. 2 shows a schematic diagram of an example process of short-distance wireless communication according to an example embodiment of this disclosure. The short-distance wireless communication shown in FIG. 2 may relate to the sending device 110, the receiving device 130, and the relay device 120-1 shown in FIG. 1. For a purpose of description, the example process shown in FIG. 2 is described below with reference to FIG. 1. However, it should be understood that the process is also applicable to another communication scenario and device.

In the example scenario shown in FIG. 2, a short-distance wireless communication technology for communication between the sending device 110, the receiving device 130, and the relay device 120-1 may be, for example, a Bluetooth technology. The Bluetooth technology may include a typical Bluetooth technology and a low power-consuming Bluetooth technology. It should be understood that the sending device 110 may send service data in a plurality of different short-distance communication methods. A short-distance communication method includes but is not limited to Bluetooth communication, Greentooth communication, mobile hotspot (Wi-Fi) communication, Zigbee (Zigbee) communication, or SparkLink communication. In addition to the listed short-distance communication technologies, another appropriate short-distance communication technology is also included in the protection scope of this disclosure.

If the receiving device 130 is in a coverage area of the sending device 110 (refer to locations of the sending device 110 and the receiving device 130 shown in FIG. 1), the sending device 110 may send the service data to the receiving device 130 through a direct link between the sending device 110 and the receiving device 130. Because Bluetooth uses a frequency hopping technology, in a Bluetooth piconet including the sending device 110 and the receiving device 130, a frequency hopping point is determined based on a Bluetooth clock and a frequency hopping table of a host (that is, the sending device). A clock offset clk_{A}_off exists between the receiving device 130 and the sending device 110.

In the example scenario shown in FIG. 2, a networking process between the relay device 120-1, the sending device 110, and the receiving device 130 is completed. As shown in FIG. 2, when the receiving device 130 moves to a coverage area of the relay device 120-1, the direct link 201 between the receiving device 130 and the sending device 110 is to be disconnected, and a direct link 202 between the receiving device 130 and the relay device 120-1 is to be established.

To enable communication between the relay device 120-1 and the receiving device 130 to be still based on clock information of the sending device 110 and configuration information associated with communication between the sending device 110 and the receiving device 130, the sending device 110 sends, to the relay device 120-1, first clock information associated with the sending device 110 and the configuration information associated with the communication between the sending device 110 and the receiving device 130.

In some embodiments, the first clock information associated with the sending device 110 may be a local clock of the sending device 110.

In some embodiments, the configuration information associated with the communication between the sending device 110 and the receiving device 130 may include one or more of encryption information for the communication, address information of the receiving device 120, and modulation information for the communication.

Based on the first clock information associated with the sending device 110, the relay device 120-1 may update second clock information associated with the relay device.

In some embodiments, the relay device 120-1 may determine a clock offset clk_{B}_off between the sending device 110 and the relay device 120-1 based on the first clock information and the second clock information, and update, based on the clock offset clk_{B}_off, the second clock information associated with the relay device.

The sending device 110 sends, to the relay device 120-1, service data information to be sent to the receiving device 130. The relay device 120-1 may further send the service data information to the receiving device 130 based on updated second clock information and the obtained configuration information associated with the communication between the sending device 110 and the receiving device 130.

When the receiving device 130 receives the service data from the relay device 120-1, because the relay device 120-1 has updated, based on clock information associated with the sending device 110, local clock information associated with the relay device 120-1, the receiving device 130 can still receive the service data based on the clock offset clk_{A}_off between the receiving device 130 and the sending device 110. Therefore, transmission of the service data can be kept smooth without interruption, so that the receiving device 130 does not perceive that a host transfer process from the sending device 110 to the relay device 120-1 has happened.

Similarly, when the host has been transferred, the service data that is from the receiving device 130 and that is to be sent to the sending device 110 may alternatively be first received by the relay device 120-1 and then forwarded to the sending device 110.

With reference to FIG. 2, the following further describes a detailed process of clock alignment between the sending device 110 and the relay device 120-1 in a scenario in which the host is transferred.

It is assumed that the clock information associated with the sending device 110 is clk_{T}, clock information associated with the relay device 120-1 is clk_{M}, and clock information associated with the receiving device 130 is clk_{R}. The clock offset between the receiving device 130 and the sending device 110 is: clk_{T} - clk_{R} = clk_{A}_off, and the clock offset between the sending device 110 and the relay device 120-1 is: clk_{T} - clk_{M} = clk_{B}_off. When the receiving device 130 is connected to the relay device 120-1, a clock offset between the receiving device 130 and the relay device 120-1 is: clk_{M} - clk_{R}. Because the clock information clk_{T} associated with the sending device 110 and the clock information clk_{M} associated with the relay device 120-1 are usually inconsistent, after the host is transferred, a receiving clock offset previously determined by the receiving device 130 changes, and a corresponding frequency hopping sequence, corresponding physical layer modulation and bandwidth configurations, and a corresponding encryption mode also need to change.

After the relay device 120-1 receives the clock information associated with the sending device 110, the relay device 120-1 may update, based on the clock information associated with the sending device 110, the clock information associated with the relay device 120-1, that is, updated clock information clk_{M}' associated with the relay device 120-1 = clk_{M} + clk_{B}_off = clk_{M} + clk_{T} - clk_{M} = clk_{T}. It can be learned that the updated clock information clk_{M}' associated with the relay device 120-1 is completely aligned with the clock information clk_{T} associated with the sending device 110. Therefore, the receiving device 130 can still receive the service data based on the clock offset clk_{A}_off, that is, clk_{T} - clk_{R}, between the receiving device 130 and the sending device 110.

In some embodiments, more than one relay device can be used to further implement a short-distance wireless communication process according to embodiments of this disclosure, to further increase the transmission distance in the short-distance wireless communication process. Now refer to FIG. 3. FIG. 3 shows a schematic diagram of an example process of short-distance wireless communication according to an example embodiment of this disclosure. The short-distance wireless communication shown in FIG. 3 may relate to the sending device 110, the receiving device 130, the relay devices 120-1 and 120-2 shown in FIG. 1. For a purpose of description, the example process shown in FIG. 3 is described below with reference to FIG. 1. However, it should be understood that the process is also applicable to another communication scenario and device.

In the example scenario shown in FIG. 3, a short-distance wireless communication technology for communication between the sending device 110, the receiving device 130, and the relay devices 120-1 and 120-2 may be, for example, a Bluetooth technology. The Bluetooth technology may include a typical Bluetooth technology and a low power-consuming Bluetooth technology. It should be understood that the sending device 110 may send service data in a plurality of different short-distance communication methods. A short-distance communication method includes but is not limited to Bluetooth communication, Greentooth communication, mobile hotspot (Wi-Fi) communication, Zigbee (Zigbee) communication, or SparkLink communication. In addition to the listed short-distance communication technologies, another appropriate short-distance communication technology is also included in the protection scope of this disclosure.

If the receiving device 130 is in a coverage area of the sending device 110 (refer to locations of the sending device 110 and the receiving device 130 shown in FIG. 1), the sending device 110 may send the service data to the receiving device 130 through a direct link between the sending device 110 and the receiving device 130. Because Bluetooth uses a frequency hopping technology, in a Bluetooth piconet including the sending device 110 and the receiving device 130, a frequency hopping point is determined based on a Bluetooth clock and a frequency hopping table of a host (that is, the sending device). A clock offset clk_{A_}off exists between the receiving device 130 and the sending device 110.

In the example scenario shown in FIG. 3, a networking process between the relay devices 120-1 and 120-2, the sending device 110, and the receiving device 130 is completed. As shown in FIG. 3, when the receiving device 130 moves to a coverage area of the relay device 120-1, the direct link 301 between the receiving device 130 and the sending device 110 is to be disconnected, and a direct link 302 between the receiving device 130 and the relay device 120-1 is to be established. However, as the receiving device 130 moves, when the receiving device 130 moves away from the coverage area of the relay device 120-1 and moves to a coverage area of the relay device 120-2, the direct link 302 between the receiving device 130 and the relay device 120-1 is to be disconnected, and the direct link 303 between the receiving device 130 and the relay device 120-2 is to be established.

When the direct link 303 between the receiving device 130 and the relay device 120-2 has been established, to enable communication between the relay device 120-2 and the receiving device 130 to be still based on clock information of the sending device 110 and configuration information associated with communication between the sending device 110 and the receiving device 130, the sending device 110 sends, to the relay device 120-1, first clock information associated with the sending device 110 and the configuration information associated with the communication between the sending device 110 and the receiving device 130, and then, the relay device 120-1 forwards the first clock information and the configuration information to the relay device 120-2.

In some embodiments, the first clock information associated with the sending device 110 may be a local clock of the sending device 110.

In some embodiments, the configuration information associated with the communication between the sending device 110 and the receiving device 130 may include one or more of encryption information for the communication, address information of the receiving device 120, and modulation information for the communication.

Similarly, based on the first clock information associated with the sending device 110, the relay device 120-2 may update third clock information associated with the relay device 120-2.

In some embodiments, the relay device 120-2 may determine a clock offset clk_{C}_off between the sending device 110 and the relay device 120-2 based on the first clock information and the third clock information, and update, based on the clock offset clk_{C}_off, the third clock information associated with the relay device.

The sending device 110 sends, to the relay device 120-1, service data information to be sent to the receiving device 130. The relay device 120-1 further forwards the service data to the relay device 120-2, so that the relay device 120-2 may send the service data information to the receiving device 130 based on updated third clock information and the obtained configuration information associated with the communication between the sending device 110 and the receiving device 130.

When the receiving device 130 receives the service data from the relay device 120-2, because the relay device 120-2 has updated, based on clock information associated with the sending device 110, local clock information associated with the relay device 120-2, the receiving device 130 can still receive the service data based on the clock offset clk_{A}_off between the receiving device 130 and the sending device 110. Therefore, transmission of the service data can be kept smooth without interruption, so that the receiving device 130 does not perceive that a host transfer process from the sending device 110 to the relay device 120-2 has happened.

Similarly, when the host has been transferred, the service data that is from the receiving device 130 and that is to be sent to the sending device 110 may alternatively be first received by the relay device 120-2 and then forwarded to the relay device 120-1, and then the relay device 120-1 forwards, to the sending device 110, the service data from the receiving device 130.

With reference to FIG. 2, the following further describes a detailed process of clock alignment between the sending device 110 and the relay device 120-1 in a scenario in which the host is transferred.

It is assumed that the clock information associated with the sending device 110 is clk_{T}, clock information associated with the relay device 120-1 is clk_{M1}, clock information associated with the relay device 120-1 is clk_{M2}, and clock information associated with the receiving device 130 is clk_{R}. The clock offset between the receiving device 130 and the sending device 110 is: clk_{T} - clk_{R} = clk_{A}_off, and the clock offset between the sending device 110 and the relay device 120-2 is: clk_{T} - clk_{M1} + clk_{M1} - clk_{M2} = clk_{T} - clk_{M2} = clk_{C}_off. When the receiving device 130 is connected to the relay device 120-1, a clock offset between the receiving device 130 and the relay device 120-1 is: clk_{M2} - clk_{R}. Because the clock information clk_{T} associated with the sending device 110 and the clock information clk_{M2} associated with the relay device 120-1 are usually inconsistent, after the host is transferred, a receiving clock offset previously determined by the receiving device 130 changes, and a corresponding frequency hopping sequence, corresponding physical layer modulation and bandwidth configurations, and a corresponding encryption mode also need to change.

After the relay device 120-2 receives the clock information associated with the sending device 110, the relay device 120-2 may update, based on the clock information associated with the sending device 110, the clock information associated with the relay device 120-2, that is, updated clock information clk_{M2}' associated with the relay device 120-2 = clk_{M2} + clkc_off = clk_{M2} + clk_{T} - clk_{M2} = clkr. It can be learned that the updated clock information clk_{M2}' associated with the relay device 120-1 is completely aligned with the clock information clk_{T} associated with the sending device 110. Therefore, the receiving device 130 can still receive the service data based on the clock offset clk_{A_}off, that is, clk_{T} - clk_{R}, between the receiving device 130 and the sending device 110.

In this manner, the relay device can relay and amplify Bluetooth information to increase a transmission distance, and ensure that the frequency hopping sequence, the physical layer modulation and bandwidth configurations, and the encryption mode remain unchanged before and after the host is transferred, to ensure a service to be continuously performed and avoid the freezing.

It should be understood that, although the foregoing descriptions include some specific implementation details, this should not be construed as limiting the scope of any invention or claims, but rather as descriptions of specific example embodiments that may be specific to a particular invention. Some features described in this specification in a context of separate example embodiments may alternatively be integrated into a single example embodiment. Conversely, various features that are described in a context of a single example embodiment may alternatively be implemented separately in a plurality of example embodiments or in any appropriate sub-combination.

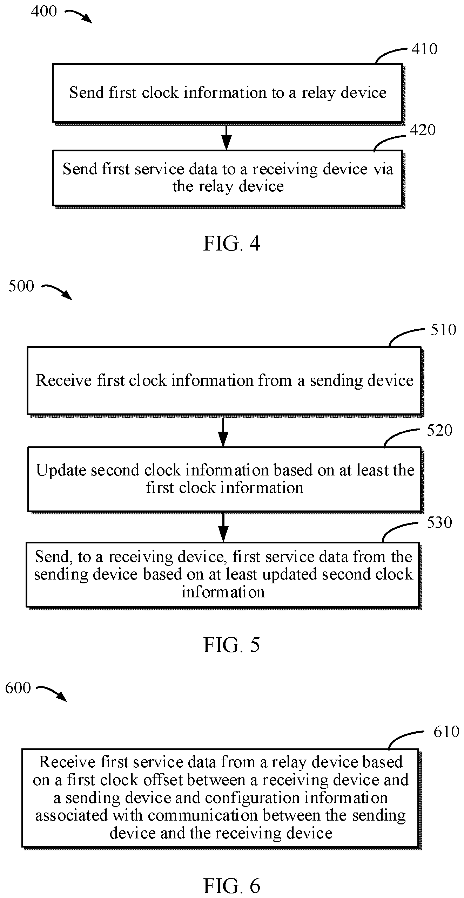

FIG. 4 shows a flowchart of a short-distance wireless communication method 400 according to an example embodiment of this disclosure. The method 400 may be implemented at the sending device 110 shown in FIG. 1, and for ease of description, the method 400 is described below with reference to FIG. 1. It should be understood that the method 400 is also applicable to another communication scenario and device.

In 410, the sending device 110 sends first clock information to a relay device, where the first clock information indicates a local clock of the sending device, and communication between the sending device and a receiving device is performed based on at least the first clock information.

In 420, the sending device 110 sends first service data to the receiving device via the relay device.

In some example embodiments, the sending device may send, to the relay device, configuration information associated with the communication, where the configuration information includes at least one of encryption information for the communication, address information of the receiving device, modulation information for the communication, a configuration parameter of a control layer, and a configuration parameter of an application layer.

In some example embodiments, the sending device may send the first clock information to the relay device via another relay device.

In some example embodiments, the sending device may send the first service data to the relay device via another relay device.

In some example embodiments, the sending device may receive second service data of the receiving device via the relay device.

In some example embodiments, short-distance wireless communication may include one of the following: Bluetooth communication, Greentooth communication, mobile hotspot (Wi-Fi) communication, Zigbee (Zigbee) communication, or SparkLink communication.

FIG. 5 shows a flowchart of a short-distance wireless communication method 500 according to an example embodiment of this disclosure. The method 500 may be implemented at the relay device 120 shown in FIG. 1, and for ease of description, the method 500 is described below with reference to FIG. 1. It should be understood that the method 500 is also applicable to another communication scenario and device.

In 510, the relay device receives first clock information from a sending device, where the first clock information indicates a local clock of the sending device, and communication between the sending device and a receiving device is performed based on at least the first clock information.

In some embodiments, the relay device 120 may receive, via another relay device, the first clock information associated with the sending device.

In 520, the relay device 120 updates second clock information based on at least the first clock information, where the second clock information indicates a local clock of the relay device.

In some example embodiments, the relay device 120 may determine a second clock offset between the sending device and the relay device based on the first clock information and the second clock information; and update the second clock information based on the second clock offset and the first clock information.

In 530, the relay device 120 sends, to the receiving device, first service data from the sending device based on at least updated second clock information.

In some example embodiments, the relay device may receive, from the receiving device, configuration information associated with the communication, where the configuration information includes at least one of encryption information for the communication, address information of the receiving device, modulation information for the communication, a configuration parameter of a control layer, and a configuration parameter of an application layer.

In some example embodiments, the relay device 120 may receive, via another relay device, the first service data to be sent to the receiving device.

In some example embodiments, the relay device 120 may receive second service data of the receiving device from the receiving device, and forward the second service data to the sending device based on configuration information.

In some example embodiments, short-distance wireless communication may include one of the following: Bluetooth communication, Greentooth communication, mobile hotspot (Wi-Fi) communication, Zigbee (Zigbee) communication, or SparkLink communication.

FIG. 6 shows a flowchart of a short-distance wireless communication method 600 according to an example embodiment of this disclosure. The method 600 may be implemented at the receiving device 130 shown in FIG. 1, and for ease of description, the method 600 is described below with reference to FIG. 1. It should be understood that the method 600 is also applicable to another communication scenario and device.

In 610, the receiving device 130 receives first service data from the receiving device via a relay device based on a first clock offset between the receiving device and a sending device and configuration information associated with communication between the sending device and the receiving device.

In some example embodiments, the configuration information includes at least one of encryption information for the communication, address information of the receiving device, modulation information for the communication, a configuration parameter of a control layer, and a configuration parameter of an application layer.

In some example embodiments, short-distance wireless communication may include one of the following: Bluetooth communication, Greentooth communication, mobile hotspot (Wi-Fi) communication, Zigbee (Zigbee) communication, or SparkLink communication.

In some example embodiments, the receiving device 130 may send second service data of the receiving device based on the configuration information.

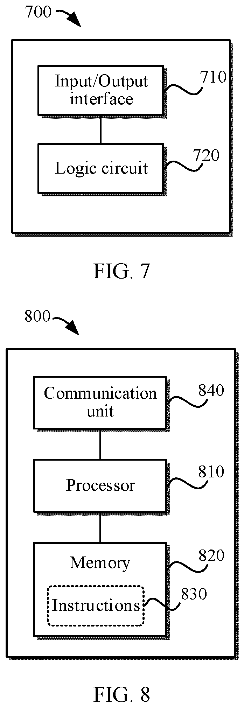

FIG. 7 shows a block diagram of a communication apparatus 700 according to an example embodiment of this disclosure. The communication apparatus 700 may be implemented as the sending device 110, the relay device 120, and the receiving device 130 that are shown in FIG. 1, a part of the foregoing device, a chip in the foregoing device, or the like. It should be understood that the communication apparatus 700 is merely used for an example purpose, and does not imply any limitation on the scope of this disclosure. This embodiment of this disclosure may be further embodied in different communication apparatuses. In addition, it should be further understood that the communication apparatus 700 may further include another element, module, or entity that is not shown for clarity, but this does not mean that this embodiment of this disclosure does not have the element or entity. The scope of this disclosure is not limited in this respect.

As shown in FIG. 7, the communication apparatus 700 includes an input/output interface 710 and a logic circuit 720. The input/output interface 710 is coupled to the logic circuit 720. In this embodiment of this disclosure, the input/output interface 710 may be integrated together to implement receiving and sending functions, or may be used as independent components to be respectively implemented as an input interface for receiving and an output interface for sending. For example, the input/output interface 710 shown in FIG. 7 is an integrated example implementation.

In an embodiment in which the communication apparatus 700 is implemented as the sending device 110 shown in FIG. 1, the input/output interface 710 may be configured to: send first clock information to a relay device, where the first clock information indicates a local clock of the sending device, and communication between the sending device and a receiving device is performed based on at least the first clock information; and send first service data to the receiving device via the relay device. The communication apparatus 700 may further include the logic circuit 720 coupled to the input/output interface 710.

In some example embodiments, the input/output interface 710 is further configured to send the first clock information to the relay device via another relay device.

In some example embodiments, the input/output interface 710 is further configured to send the first service data to the relay device via another relay device.

In some example embodiments, the input/output interface 710 is further configured to receive second service data of the receiving device via the relay device.

In some example embodiments, the input/output interface 710 is further configured to send, to the relay device, configuration information associated with the communication, where the configuration information includes at least one of encryption information for the communication, address information of the receiving device, modulation information for the communication, a configuration parameter of a control layer, and a configuration parameter of an application layer.

In some example embodiments, short-distance wireless communication may include one of the following: Bluetooth communication, Greentooth communication, mobile hotspot (Wi-Fi) communication, Zigbee (Zigbee) communication, or SparkLink communication.

In an embodiment in which the communication apparatus 700 is implemented as the relay device 120 shown in FIG. 1, the input/output interface 710 may be configured to: receive first clock information from a sending device, where the first clock information indicates a local clock of the sending device, and communication between the sending device and a receiving device is performed based on at least the first clock information; and send, to the receiving device, first service data from the sending device based on at least updated second clock information. The logic circuit 720 coupled to the input/output interface 710 may be configured to update second clock information based on at least the first clock information, where the second clock information indicates a local clock of the relay device.

In some example embodiments, the logic circuit 720 is further configured to: determine a second clock offset between the sending device and the relay device based on the first clock information and the second clock information; and update the second clock information based on the second clock offset and the first clock information.

In some example embodiments, the input/output interface 710 is further configured to receive, via another relay device, the first clock information associated with the sending device.

In some example embodiments, the input/output interface 710 is further configured to receive, via another relay device, the first service data to be sent to the receiving device.

In some example embodiments, the input/output interface 710 is further configured to: receive second service data of the receiving device from the receiving device, and forward the second service data to the sending device based on configuration information.

In some example embodiments, the input/output interface 710 is further configured to receive, from the receiving device, configuration information associated with the communication, where the configuration information includes at least one of encryption information for the communication, address information of the receiving device, modulation information for the communication, a configuration parameter of a control layer, and a configuration parameter of an application layer.

In some example embodiments, short-distance wireless communication may include one of the following: Bluetooth communication, Greentooth communication, mobile hotspot (Wi-Fi) communication, Zigbee (Zigbee) communication, or SparkLink communication.

In an embodiment in which the communication apparatus 700 is implemented as the receiving device 130 shown in FIG. 1, the input/output interface 710 may be configured to receive first service data from the receiving device via a relay device based on a first clock offset between the receiving device and a sending device and configuration information associated with communication between the sending device and the receiving device. The communication apparatus 700 may further include the logic circuit 720 coupled to the input/output interface 710.

In some example embodiments, the input/output interface 710 is further configured to send second service data of the receiving device based on the configuration information.

In some example embodiments, the configuration information includes at least one of encryption information for the communication, address information of the receiving device, modulation information for the communication, a configuration parameter of a control layer, and a configuration parameter of an application layer.

In some example embodiments, short-distance wireless communication may include one of the following: Bluetooth communication, Greentooth communication, mobile hotspot (Wi-Fi) communication, Zigbee (Zigbee) communication, or SparkLink communication.

It should be understood that the communication apparatus 700 in FIG. 7 can be configured to perform the processes implemented by the sending device 110, the relay device 120, and the receiving device 130 with reference to embodiments in FIG. 2 to FIG. 5. To avoid repetition, details are not described herein again.

FIG. 8 shows a block diagram of a communication apparatus 800 in which some embodiments of this disclosure may be implemented. The communication apparatus 800 can be configured to implement the sending device 110, the relay device 120, and the receiving device 130 shown in FIG. 1. The communication apparatus 800 may alternatively be implemented as a chip or a chip system. It should be understood that the communication apparatus 800 is merely used for an example purpose, and does not imply any limitation on the scope of this disclosure. This embodiment of this disclosure may be further embodied in different devices. It should be further understood that the communication apparatus 800 may further include another element or entity, which is not shown for ease of description, but this does not mean that this embodiment of this disclosure does not have the element or entity.

As shown in FIG. 8, the communication apparatus 800 includes a processor 810, and the processor 810 controls an operation and a function of the communication apparatus 800. For example, in some example embodiments, the processor 810 may perform various operations by using instructions 830 stored in a memory 820 coupled to the processor 810. The memory 820 may be of any appropriate type applicable to a local technical environment, and may be implemented by using any appropriate data storage technology, and may include but is not limited to a semiconductor-based storage device, a magnetic storage device and system, and an optical storage device and system. Although only one memory unit is shown in FIG. 8, there may be a plurality of physically different memory units in the communication apparatus 800. It should be understood that the processor 810 and the memory 820 may be disposed separately as independent components, or may be integrated together. This is not limited in this application.

The processor 810 may be of any appropriate type applicable to the local technical environment, and may include but is not limited to one or more of a general-purpose computer, a special-purpose computer, a microcontroller, a digital signal processor (Digital Signal Processor, DSP), and a controller-based multi-core controller architecture. The communication apparatus 800 may also include a plurality of processors, such as an application-specific integrated circuit chip, which belongs to a clock synchronized in time with a main processor. The processor 810 is coupled to a communication unit 840. The communication unit 840 may receive and send information via a radio signal or with help of an optical fiber, a cable, and/or another component.

The memory 820 may include one or more nonvolatile memories and one or more volatile memories. An example of the nonvolatile memory includes but is not limited to a read-only memory (Read-Only Memory, ROM), an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. An Example of the volatile memory includes but is not limited to a random access memory (Random Access Memory, RAM) and the like.

This embodiment of this disclosure may be implemented with help of a computer program, so that the communication apparatus 800 may perform any process described with reference to FIG. 2 to FIG. 6. This embodiment of this disclosure may alternatively be implemented by using hardware or a combination of software and hardware. The computer program includes the computer-executable instructions 830 executed by the processor 810. The computer program may be stored in the memory 820. The processor 810 may perform any appropriate action and processing by loading the computer program into the RAM.

In the foregoing embodiments in which the sending device 110, the relay device 120, and the receiving device 130 determine an adjustment parameter by using a machine learning algorithm module, a reinforcement learning model, and the like, the module and the model may be stored in the memory 820 in a manner of computer program code or the instructions 830. The processor executes the program code or the instructions in the memory 820 to enable the communication apparatus 800 to perform processing processes implemented by the sending device 110, the relay device 120, and the receiving device 130 in FIG. 2 to FIG. 6.

In some embodiments, the computer program may be tangibly included in a computer-readable medium. The computer-readable medium may be included in the communication apparatus 800 (for example, in the memory 820) or another storage device that may be accessed by the communication apparatus 800. The computer program may be loaded from the computer-readable medium into the RAM for execution. The computer-readable medium may include any type of tangible nonvolatile memory, such as a ROM, an EPROM, a flash memory, a hard disk, a CD, or a DVD.

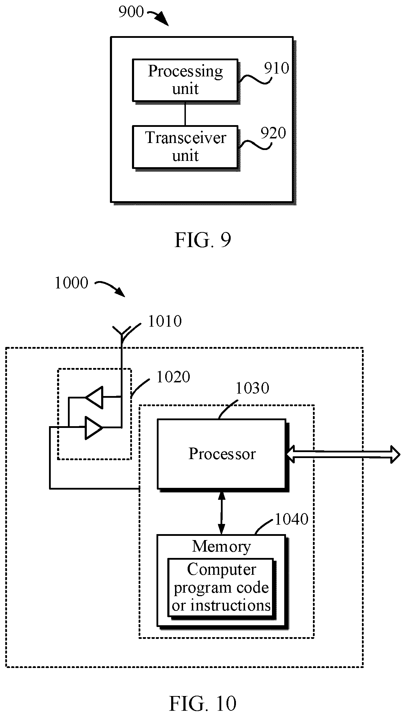

FIG. 9 shows a block diagram of a communication apparatus according to an example embodiment of this disclosure. As shown in FIG. 9, the communication apparatus 900 includes a processing unit 910 and a transceiver unit 920. The communication apparatus 900 is configured to implement functions of the sending device 110, the relay device 120, and the receiving device 130 in the method embodiments shown in FIG. 4 to FIG. 6. The processing unit 910 may perform internal processing. The transceiver unit 920 may communicate with an outside. The transceiver unit 920 may also be referred to as a communication interface, an input/output interface, or the like. For example, the transceiver unit 920 may include a sending unit and a receiving unit. The sending unit is configured to perform sending operations of the sending device 110, the relay device 120, and the receiving device 130 in the foregoing method embodiments. The receiving unit is configured to perform receiving operations of the sending device 110, the relay device 120, and the receiving device 130 in the foregoing method embodiments.

When the communication apparatus 900 is configured to implement a function of the sending device 110 in the method embodiment shown in FIG. 4, the transceiver unit 920 is configured to: send first clock information to a relay device, where the first clock information indicates a local clock of the sending device, and communication between the sending device and a receiving device is performed based on at least the first clock information; and send first service data to the receiving device via the relay device.

When the communication apparatus 900 is configured to implement the function of the sending device 110 in the method embodiment shown in FIG. 4, the transceiver unit 920 is configured to send the first clock information to the relay device via another relay device.

When the communication apparatus 900 is configured to implement the function of the sending device 110 in the method embodiment shown in FIG. 4, the transceiver unit 920 is configured to send the first service data to the relay device via another relay device.

When the communication apparatus 900 is configured to implement the function of the sending device 110 in the method embodiment shown in FIG. 4, the transceiver unit 920 is configured to receive second service data of the receiving device via the relay device.

When the communication apparatus 900 is configured to implement the function of the sending device 110 in the method embodiment shown in FIG. 4, the transceiver unit 920 is configured to send, to the relay device, configuration information associated with the communication, where the configuration information includes at least one of encryption information for the communication, address information of the receiving device, modulation information for the communication, a configuration parameter of a control layer, and a configuration parameter of an application layer.

When the communication apparatus 900 is configured to implement the function of the sending device 110 in the method embodiment shown in FIG. 4, short-distance wireless communication may include one of the following: Bluetooth communication, Greentooth communication, mobile hotspot (Wi-Fi) communication, Zigbee (Zigbee) communication, or SparkLink communication.

When the communication apparatus 900 is configured to implement a function of the relay device 120 in the method embodiment shown in FIG. 5, the transceiver unit 920 is configured to: receive first clock information from a sending device, where the first clock information indicates a local clock of the sending device, and communication between the sending device and a receiving device is performed based on at least the first clock information; and send, to the receiving device, first service data from the sending device based on at least updated second clock information. The processing unit 910 is configured to update second clock information based on at least the first clock information, where the second clock information indicates a local clock of the relay device.

When the communication apparatus 900 is configured to implement the function of the relay device 120 in the method embodiment shown in FIG. 5, the processing unit 910 is configured to: determine a second clock offset between the sending device and the relay device based on the first clock information and the second clock information; and update the second clock information based on the second clock offset and the first clock information. When the communication apparatus 900 is configured to implement the function of the relay device 120 in the method embodiment shown in FIG. 5, the transceiver unit 920 is configured to receive, via another relay device, the first clock information associated with the sending device.

When the communication apparatus 900 is configured to implement the function of the relay device 120 in the method embodiment shown in FIG. 5, the transceiver unit 920 is configured to receive, via another relay device, the first service data to be sent to the receiving device.

When the communication apparatus 900 is configured to implement the function of the relay device 120 in the method embodiment shown in FIG. 5, the transceiver unit 920 is configured to: receive second service data of the receiving device from the receiving device; and forward the second service data to the sending device based on configuration information.

When the communication apparatus 900 is configured to implement the function of the relay device 120 in the method embodiment shown in FIG. 5, the transceiver unit 920 is configured to receive, from the receiving device, configuration information associated with the communication, where the configuration information includes at least one of encryption information for the communication, address information of the receiving device, modulation information for the communication, a configuration parameter of a control layer, and a configuration parameter of an application layer.

When the communication apparatus 900 is configured to implement the function of the relay device 120 in the method embodiment shown in FIG. 5, short-distance wireless communication may include one of the following: Bluetooth communication, Greentooth communication, mobile hotspot (Wi-Fi) communication, Zigbee (Zigbee) communication, or SparkLink communication.

When the communication apparatus 900 is configured to implement a function of the receiving device 130 in the method embodiment shown in FIG. 6, the transceiver unit 920 is configured to receive first service data from the receiving device via a relay device based on a first clock offset between the receiving device and a sending device and configuration information associated with communication between the sending device and the receiving device.

When the communication apparatus 900 is configured to implement the function of the receiving device 130 in the method embodiment shown in FIG. 6, the transceiver unit 920 is configured to send second service data of the receiving device based on the configuration information.

When the communication apparatus 900 is configured to implement the function of the receiving device 130 in the method embodiment shown in FIG. 6, the configuration information includes at least one of encryption information for communication, address information of the receiving device, modulation information for communication, a configuration parameter of a control layer, and a configuration parameter of an application layer.

When the communication apparatus 900 is configured to implement the function of the receiving device 130 in the method embodiment shown in FIG. 6, short-distance wireless communication may include one of the following: Bluetooth communication, Greentooth communication, mobile hotspot (Wi-Fi) communication, Zigbee (Zigbee) communication, or SparkLink communication.

For more detailed descriptions of the processing unit 910 and the transceiver unit 920, directly refer to related descriptions in the method embodiments shown in FIG. 4 to FIG. 6. Details are not described herein again.

FIG. 10 shows a block diagram of a communication apparatus according to an example embodiment of this disclosure. As shown in FIG. 10, a possible schematic diagram of a base station device or a terminal device 1000 is provided, including an antenna 1010, a signal transceiver unit 1020, a processor 1030, and a memory 1040. The memory 1040 is configured to store computer program code, instructions, or the like. The processor 1030 is configured to execute a program or the instructions, to implement operations of the sending device 110, the relay device 120, or the receiving device 130 in the method embodiments shown in FIG. 4 to FIG. 6. It may be understood that the signal transceiver unit may be a transceiver, including a transmitter and a receiver. The transmitter may send a signal to another device such as the base station device or the terminal device. The receiver may receive the signal from the another device, for example, a core network, the base station device, or the terminal device.

In general, various example embodiments of this disclosure may be implemented in hardware or a dedicated circuit, software, logic, or any combination thereof. Some aspects may be implemented in the hardware, while other aspects may be implemented in firmware or software that may be executed by a controller, a microprocessor, or another computing device. When aspects of the example embodiments of this disclosure are illustrated or described as block diagrams, flowcharts, or represented using some other figures, it will be understood that the blocks, apparatuses, systems, techniques, or methods described herein may be implemented as non-limiting examples in the hardware, the software, the firmware, the dedicated circuit or the logic, general-purpose hardware or the controller, or the another computing device, or some combinations thereof.

For example, the example embodiments of this disclosure may be described in a context of machine-executable or computer-executable instructions. The machine-executable instructions are, for example, a program module executed in a device included in a real or virtual processor of a target. In general, the program module includes a routine, a program, a library, an object, a class, a component, a data structure, and the like, and executes a specific task or implements a specific abstract data structure. In various example embodiments, functions of the program module may be combined or split between described program modules. The machine-executable instructions used for the program module may be executed locally or in a distributed device. In the distributed device, the program module may be located in both a local storage medium and a remote storage medium.

Computer program code used to implement the methods disclosed in this disclosure may be written in one or more programming languages. The computer program code may be provided for a processor of a general-purpose computer, a special-purpose computer, or another programmable data processing apparatus, so that when the program code is executed by a computer or the another programmable data processing apparatus, a function/an operation specified in the flowcharts and/or block diagrams are implemented. The program code may be executed all on the computer, partially on the computer, as an independent software package, partially on the computer and partially on a remote computer, or all on a remote computer or server.

In a context of this disclosure, the computer program code or related data may be carried by any appropriate carrier, so that a device, an apparatus, or the processor can perform various processing and operations described above. Examples of the carrier include a signal, a computer-readable medium, and the like. For example, the signal may include a propagating signal in an electrical, optical, radio, sound, or another form, such as a carrier wave and an infrared signal.

In the context of this disclosure, a machine-readable medium or a computer-readable medium may be any tangible medium that includes or stores a program for or has a program related to an instruction execution system, the apparatus, or the device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, while operations are described in a particular order, this should not be understood as requiring such operations to be completed in the particular order shown or in a successive order, or performing all the illustrated operations to obtain the desired results. In some cases, multitasking or parallel processing is advantageous. Similarly, although the foregoing descriptions include some specific implementation details, this should not be construed as limiting the scope of any claim, but rather as descriptions of specific example embodiments. Some features described in this specification in a context of separate example embodiments may alternatively be integrated into a single example embodiment. Conversely, various features that are described in a context of a single example embodiment may alternatively be implemented separately in a plurality of example embodiments or in any appropriate sub-combination.

Although a subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A short-distance wireless communication method, comprising:
sending, by a sending device, first clock information to a relay device, wherein the first clock information indicates a local clock of the sending device, and communication between the sending device and a receiving device is performed based on at least the first clock information; and
sending, by the sending device, first service data to the receiving device via the relay device.

2. The method according to claim 1, further comprising:
sending, by the sending device to the relay device, configuration information associated with the communication, wherein the configuration information comprises at least one of the following:
encryption information for the communication;
address information of the receiving device;
modulation information for the communication;
a configuration parameter of a control layer; or
a configuration parameter of an application layer.

3. The method according to claim 1, wherein sending, to the relay device, the first clock information associated with the sending device comprises:
sending the first clock information to the relay device via another relay device.

4. The method according to claim 1, wherein sending, to the relay device, the first service data to be sent to the receiving device comprises:
sending the first service data to the relay device via another relay device.

5. The method according to claim 1, further comprising:
receiving second service data of the receiving device via the relay device.

6. The method according to claim 1, wherein short-distance wireless communication comprises one of the following: Bluetooth communication, Greentooth communication, mobile hotspot (Wi-Fi) communication, Zigbee (Zigbee) communication, or SparkLink communication.

7. A short-distance wireless communication method, comprising:
receiving, by a relay device, first clock information from a sending device, wherein the first clock information indicates a local clock of the sending device, and communication between the sending device and a receiving device is performed based on at least the first clock information;
updating, by the relay device, second clock information based on at least the first clock information, wherein the second clock information indicates a local clock of the relay device; and
sending, by the relay device to the receiving device, first service data from the sending device based on at least updated second clock information.

8. The method according to claim 7, wherein updating the second clock information associated with the relay device comprises:
determining a second clock offset between the sending device and the relay device based on the first clock information and the second clock information; and
updating the second clock information based on the second clock offset and the first clock information.

9. The method according to claim 7, wherein the sending first service data comprises:
receiving, from the receiving device, configuration information associated with the communication, wherein the configuration information comprises at least one of the following:
encryption information for the communication;
address information of the receiving device;
modulation information for the communication;
a configuration parameter of a control layer; or
a configuration parameter of an application layer; and
sending first service information based on the updated second clock information and the configuration information.

10. The method according to claim 7, wherein receiving the first clock information associated with the sending device comprises:
receiving, via another relay device, the first clock information associated with the sending device.

11. The method according to claim 7, further comprising:
receiving, via another relay device, the first service data to be sent to the receiving device.

12. The method according to claim 7, further comprising:
receiving second service data of the receiving device from the receiving device; and
forwarding the second service data to the sending device based on configuration information.

13. The method according to claim 7, wherein short-distance wireless communication may comprise one of the following: Bluetooth communication, Greentooth communication, mobile hotspot (Wi-Fi) communication, Zigbee (Zigbee) communication, or SparkLink communication.

14. A short-distance wireless communication method, comprising:
receiving, by a receiving device, first service data from the receiving device via a relay device based on a first clock offset between the receiving device and a sending device and configuration information associated with communication between the sending device and the receiving device.

15. The method according to claim 14, wherein the configuration information comprises at least one of the following:
encryption information for the communication;
address information of the receiving device; and
modulation information for the communication.

16. The method according to claim 14, further comprising:
sending second service data of the receiving device based on the configuration information.

17. The method according to claim 14, wherein short-distance wireless communication may comprise one of the following: Bluetooth communication, Greentooth communication, mobile hotspot (Wi-Fi) communication, Zigbee (Zigbee) communication, or SparkLink communication.

18. A communication device, comprising:
a transceiver, and a processor coupled to the transceiver, wherein
the processor is configured to perform the method according to any one of claims 1 to 6.

19. A communication device, comprising:
a transceiver, and a processor coupled to the transceiver, wherein
the processor is configured to perform the method according to any one of claims 7 to 13.

20. A communication device, comprising:
a transceiver, and a processor coupled to the transceiver, wherein
the processor is configured to perform the method according to any one of claims 14 to 17.

21. A communication device, comprising:
a processor; and
a transceiver coupled to the processor, and configured to:
send first clock information to a relay device, wherein the first clock information indicates a local clock of a sending device, and communication between the sending device and a receiving device is performed based on at least the first clock information; and
send first service data to the receiving device via the relay device.

22. A communication device, comprising:
a transceiver, configured to:
receive first clock information from a sending device, wherein the first clock information is a local clock of the sending device, and communication between the sending device and a receiving device is performed based on at least the first clock information; and
send, to the receiving device, first service data from the sending device based on at least updated second clock information; and
a processor coupled to the transceiver, and configured to:
update second clock information based on at least the first clock information, wherein the second clock information indicates a local clock of a relay device.

23. A communication device, comprising:
a processor; and
a transceiver coupled to the processor, and configured to receive first service data from a receiving device via a relay device based on a first clock offset between the receiving device and a sending device and configuration information associated with communication between the sending device and the receiving device.

24. A computer-readable storage medium, wherein the computer-readable storage medium stores computer-executable instructions, and when the computer-executable instructions are executed by a processor, the processor is enabled to perform the method according to any one of claims 1 to 6, the method according to any one of claims 7 to 13, and the method according to any one of claims 14 to 17.
